# EUROPÄISCHE PATENTSCHRIFT

(11) **EP 2 191 171 B1**
(45) Veröffentlichungstag und Bekanntmachung des Hinweises auf die Patenterteilung: **23.02.2011**
(21) Anmeldenummer: 08804237.9
(22) Anmeldetag: 16.09.2008
(51) Int. Cl.: F16H 57/04, F16D 23/02

(54) **VERFAHREN UND VORRICHTUNG ZUR BEÖLUNG DER AXIALANLÄUFE VON AUF EINER WELLE ANGEORDNETEN LOSRÄDERN**
METHOD AND DEVICE FOR OILING THE AXIAL APPROACHES OF LOOSE WHEELS DISPOSED ON A SHAFT
PROCÉDÉ ET DISPOSITIF DE LUBRIFICATION DES BUTÉES AXIALES DE ROUES FOLLES MONTÉES SUR UN ARBRE

(30) Priorität: 22.09.2007 DE 102007045368
(43) Veröffentlichungstag der Anmeldung: 02.06.2010
(73) Patentinhaber: ZF Friedrichshafen AG, 88038 Friedrichshafen (DE)
(72) Erfinder: KLOSE, Harald, 14774 Brandenburg (DE); DRABEK, Michael, 14776 Brandenburg (DE); KÖNIG, Jan-Peter, 14550 Gross-Kreutz (DE)
(86) Internationale Anmeldenummer: PCT/EP2008/062278
(87) Internationale Veröffentlichungsnummer: WO 2009/037241

(56) Entgegenhaltungen:
- EP-A- 0 476 395
- DE-A1- 10 216 137
- DE-C2- 19 822 904
- JP-A- 2004 076 810

## Beschreibung

Die vorliegende Erfindung bezieht sich auf die Ausgestaltung der Axialanläufe von auf einer Welle angeordneten Losrädern an wellenfest angeordneten Bauteilen gemäß dem Oberbegriff des Patentanspruchs 1.

Die Beölung der Axialanläufe von auf einer Welle angeordneten Lösrädem an wellenfest angeordneten Bauteilen eines Getriebes, beispielsweise an Synchronkörpern von Synchronisierungen, erfolgt bei Handschaltgetrieben von PKW's nach dem Stand der Technik über Schleuderöl aus dem Tauchsumpf, wobei zu diesem Zweck an einem der beteiligten Partner (d.h. am Losrad oder am wellenfesten Bauteil) Öl-Sammeltaschen derart eingebracht sind, dass Öl zur Lagerstelle nach innen transportiert wird.

Bei geschaltetem Gang werden die Axialanläufe des dem Gang zugeordneten Losrads aufgrund der Mikrobewegung der beteiligten Partner systembedingt durch Reibrost geschädigt. Hierbei ist festgestellt worden, dass eine ausreichende Ölversorgung zu einer Minimierung des Reibrosts und somit zu einer Verbesserung des Verschleißverhaltens führt.

Aus der DE 198 22 904 C2 geht ein Verfahren zum Aufbringen einer Schmierstoffschicht auf eine tribologisch beanspruchte Oberfläche einer Anlaufscheibe sowie eine entsprechende Anlaufscheibe hervor, wobei die Schmierstoffschicht zumindest unter Beanspruchungsbedingungen Borsäure aufweist. Zur Herstellung wird die zu beschichtende Anlaufscheibe in einen Reaktor eingebaut und der Reaktor evakuiert, wobei anschließend ein Prozeßgas eingeleitet wird, welches Bor, Stickstoff und/oder Kohlenstoff zumindest als Verbindung aufweist oder bei Prozeßbedingungen das entsprechende Element freigibt und im Bereich der Oberfläche des Gegenstandes, insbesondere durch Diffusion, eindringt.

Zur Herstellung einer Bor und Sauerstoff aufweisenden Zwischenschicht wird ein Bor zumindest als Verbindung aufweisendes und bei Prozeßbedingungen das Bor freigebende zweite Vormaterial und ein Sauerstoff zumindest als Verbindung aufweisendes und bei Prozeßbeginn den Sauerstoff freigebendes erstes Vormaterial in die abscheidende Gasphase eingeleitet. Spätestens im Einsatzfall wird gemäß der DE 198 22 904 C2 zumindest teilweise das Bor und der Sauerstoff der Zwischenschicht zumindest im Bereich ihrer frei zugänglichen Oberfläche unter Zuhilfenahme von Wasserstoff zu Borsäure als Trockenschmiermittel umgewandelt.

Aus der EP 0476395 B1 ist eine Anlaufscheibenanordnung für Planetenräder eines Planetenradträgers bekannt, mit paarweise aneinanderliegend angeordneten Ausnehmungen aufweisenden Anlaufscheiben, von denen zumindest die inneren Anlaufscheiben als nicht drehfest festgelegte, gelochte Scheiben aus Stahl gebildet sind und die äußeren Anlaufscheiben als bronzeplattierte Scheiben mit an ihren Öffnungen für die Planetenradbolzen mit Ausnehmungen versehene Scheiben ausgebildet sind, welche die zur Sonnenradöffnung des Planetenradträgers gerichteten Schrägen und Ausnehmungen im Planetenradträger übergreifen und Schmiermittel-Sammeltaschen bilden. Bei der bekannten Anlaufscheibenanordnung sind die äußeren Anlaufscheiben am Planetenradträger drehfest festgelegt und weisen eine der Sonnenradöffnung in etwa folgende kreisbogenförmig verlaufende Seitenkante auf.

Ein Axialanlauf nach dem Oberbegriff des Anspruch 1 ist jeweils aus der JP2004-78610A und der DE10216137A1 bekannt.

Der vorliegenden Erfindung liegt die Aufgabe zugrunde, eine Ausgestaltung der Axialanläufe von Losrädern an wellenfest angeordneten Bauteilen anzugeben, welche eine Optimierung der Beölung derselben ermöglicht

Diese Aufgabe wird durch die Merkmale des Patentanspruchs 1 gelöst. Weitere erfindungsgemäße Ausgestaltungen und Vorteile gehen aus den entsprechenden Unteransprüchen hervor.

Demnach wird vorgeschlagen, die Beölung der Axialanläufe von Losrädern an wellenfest angeordneten Bauteilen mittels Ölzufuhr durch eine axial verlaufende Bohrung bzw. Öldurchführung der Welle und durch mit der Öldurchführung fluidtechnisch verbundene am Axialanlauf angebrachte Nuten durchzuführen.

Diese Vorgehensweise ist besonders vorteilhaft, wenn die Welle, auf der das Losrad und das wellenfest angeordnete Bauteil angeordnet sind, zur Zwangsschmierung von rotierenden Bauteilen von innen ohnehin hohlgebohrt ist bzw. eine axial verlaufende Bohrung bzw. Öldurchführung aufweist. Auch in diesem Fall steht zur Beölung der Axialanläufe der auf der Welle angeordneten Losräder an einem wellenfest angeordneten Bauteil Öl in ausreichendem Maß zur Verfügung.

Gemäß der Erfindung weist das wellenfest angeordnete Bauteil anstelle der aus dem Stand der Technik bekannten Öltaschen zur Ölversorgung der Loslagers bzw. der Axialanläufe mit aufgefangenem Schleuderöl von außen, mehrere vorzugsweise radial verlaufende durchgehende Nuten auf, die an der dem Losrad zugewandten Seite des Axialanlaufs des Bauteils um den Umfang des Axialanlaufs verteilt angeordnet sind und mit der axial verlaufenden Bohrung bzw. Öldurchführung der Welle fluidtechnisch verbunden sind; diese Nutten verhindern einen Ölstau und ermöglichen eine Schmierung des Axialanlaufes der Lösräder am wellenfest angeordneten Bauteil bei Öldurchfluss.

Im Rahmen einer vorteilhaften Weiterbildung der Erfindung sind zusätzlich oder alternativ zu den durchgehenden Nuten kürzere, nicht durchgehende Nuten vorgesehen, die an der dem Losrad zugewandten Seite des Axialanlaufs des Bauteils um den Umfang des Axialanlaufs verteilt angeordnet sind und mit der axial verlaufenden Bohrung bzw. Öldurchführung der Welle fluidtechnisch verbunden sind und kürzer sind, als der Außendurchmesser des Axialanlaufs am wellenfest angeordneten Bauteil.

Dadurch wird sichergestellt, dass über die Drehzahl der Welle und somit des wellenfest angeordneten Bauteils und die daraus resultierende Fliehkraft ein ausreichender Öldruck zwischen dem Axialanlauf und dem Losrad entsteht, wodurch stets eine zur Schmierung ausreichend Ölmenge zwischen dem Axialanlauf und dem Losrad gedrückt wird.

Die Nuten können gemäß der Erfindung nadelförmig sein und radial verlaufen oder weitere Formen annehmen; beispielsweise können die Nuten eine Krümmung aufweisen.

Vorzugsweise sind für den Fall, dass sowohl durchgehende als auch nicht durchgehende Nuten vorgesehen sind, diese abwechselnd um den Umfang des Axialanlaufs am wellenfest angeordneten Bauteil angeordnet.

Durch die erfindungsgemäße Konzeption ist sowohl bei Differenzdrehzahl zwischen dem Losrad und dem wellenfest angeordneten Bauteil (z. B. bei nicht geschaltetem Gang, für den das Losrad benötigt wird) als auch ohne eine Differenzdrehzahl zwischen dem Losrad und dem wellenfest angeordneten Bauteil (z.B. bei geschaltetem Gang) eine ausreichende Beölung des Axialanlaufs erzielbar. Je höher die Anzahl der Nuten ist, desto effektiver ist die Beölung ohne eine Differenzdrehzahl, da dadurch mehr Fläche des Axialanlaufs geschmiert werden kann.

Das wellenfest angeordnete Bauteil kann beispielsweise der Synchronkörper einer Synchronisierung, ein Element eines Klauenschaltelementes ohne eine Synchronisiereinrichtung oder eine Anlaufscheibe sein.

Für den Fall, dass das wellenfest angeordnete Bauteil der Synchronkörper einer Synchronisierung ist, kann vorgesehen sein, dass radial betrachtet unter den Druckstückpositionen jeweils zumindest eine durchgehende Nut angebracht ist, wodurch die Druckstücke mit Öl versorgt werden können.

Gemäß der Erfindung kann die vorgeschlagene Ausgestaltung des Axialanlaufs zumindest teilweise kostenneutral durch Sintern realisiert werden, wodurch die Herstellungskosten niedrig gehalten werden.

Im Vergleich zu den aus dem Stand der Technik bekannten Konstruktionen wird durch die auf den Umfang des Axialanlaufs verteilte Beölung der Reibrosts effektiver minimiert, was zu einer erheblichen Verbesserung des Verschleißverhaltens führt.

Ein weiterer Vorteil der Erfindung ist, dass durch die auf den Umfang des Axialanlaufs verteilte Beölung die Fläche des tragenden Axialanlaufs vergrößert werden kann, was in einer geringeren Flächenpressung resultiert. Dadurch wird der Verschleiß weiter reduziert. Des weiteren ist es möglich, über die Anzahl, Geometrie, Dimensionierung und/oder Verteilung der Nuten den Einsatz des Schmieröls am Axialanlauf gezielt zu beeinflussen.

Die Erfindung wird im folgenden anhand der beigefügten Figuren beispielhaft näher erläutert: Es zeigen:
- Figur 1:: Eine schematische Schnittansicht eines ersten und eines zweiten auf einer hohlgebohrten Welle ange- ordneten Losrads, wobei zwischen den Losrädern eine Synchronisierung angeordnet ist und wobei die Beölung der Axialanläufe an der Synchronisierung gemäß der Erfindung erfolgt;
- Figur 2:: Eine perspektivische Draufsicht eines gemäß einer bevorzugten Ausführungsform der Erfindung ausge- bildeten Axialanlaufs am Synchronkörper einer Syn- chronisierung und eine Detailansicht eines Teiles des Axialanlaufs; und
- Figur 3:: Zwei schematische Detailansichten des durch den Kreis in Figur 1 markierten Bereichs zur Veran- schaulichung einer erfindungsgemäßen Ausgestal- tung des Axialanlaufs.

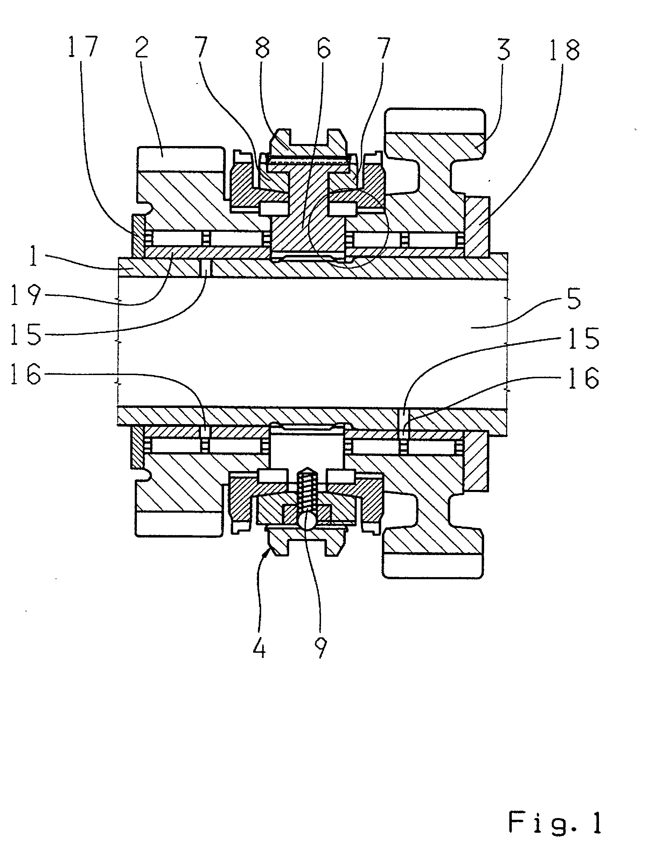

In Figur 1 sind zwei auf einer zum Zweck der Ölversorgung hohlgebohrten Welle 1, deren axial verlaufende Bohrung bzw. Öldurchführung mit 5 bezeichnet ist, angeordnete Losräder 2, 3, umfassend jeweils eine Klauenverzahnung gezeigt, die durch eine Synchronisierung 4 mit der Welle 1 wahlweise drehfest verbindbar sind. Die Synchronisierung weist, wie aus dem Stand der Technik bekannt, einen mit der Welle 1 drehfest verbundenen Synchronkörper 6 sowie Synchronringe 7 und eine Schaltmuffe 8 auf. Des weiteren umfasst die Synchronisierung in herkömmlicher Art und Weise vorzugsweise drei Druckstücke 9 auf.

Erfindungsgemäß erfolgt die Beölung der Axialanläufe der Losräder 2, 3 am Synchronkörper 6 der Synchronisierung 4 mittels Ölzufuhr durch die axial verlaufende Bohrung bzw. Öldurchführung 5 der Welle 1. Zu diesem Zweck weist die Welle 1 radiale Bohrungen 15 auf, die von der Oberfläche der Welle1 in die axial verlaufende Öldurchführung 5 führen, welche mit radialen Bohrungen 16 der Lagerbuchsen 19 zur Ölversorgung zusammenwirken.

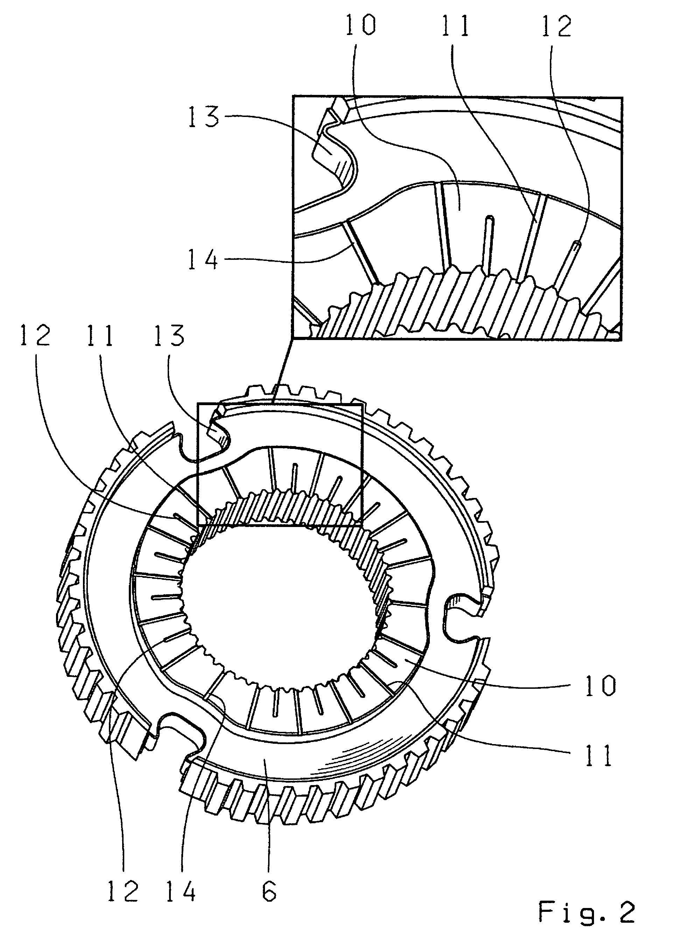

In Figur 2 ist ein gemäß einer besonders vorteilhaften Ausführungsform der Erfindung ausgeführter Axialanlauf 10 am Synchronkörper 6 der Synchronisierung 4 dargestellt. Hierbei weist der Axialanlauf 10, mehrere radial verlaufende durchgehende nadelähnliche Nuten 11 auf, die an der dem jeweiligen Losrad zugewandten Seite des Axialanlaufs um den Umfang des Axialanlaufs verteilt angeordnet sind und mit der axial verlaufenden Bohrung bzw. Öldurchführung 5 der Welle 1 fluidtechnisch verbunden sind.

Des weiteren sind bei dem gezeigten Ausführungsbeispiel zusätzlich zu den durchgehenden Nuten 11 kürzere, nicht durchgehende Nuten 12 vorgesehen, die ebenfalls an der dem jeweiligen Losrad zugewandten Seite des Axialanlaufs 10 um den Umfang des Axialanlaufs 10 verteilt angeordnet sind und mit der axial verlaufenden Bohrung bzw. Öldurchführung 5 der Welle 1 fluidtechnisch verbunden sind; diese Nuten 12 sind kürzer, als der Außendurchmesser des Axialanlaufs 10 am Synchronkörper 6 der Synchronisierung 4.

In Figur 2 sind mit 13 die am Synchronkörper 6 der Synchronisierung 4 vorgesehenen Druckstückpositionen bzw. Druckstückaufnahmen bezeichnet; wie aus der Figur ersichtlich ist radial betrachtet unterhalb der Druckstückaufnahmen 13 jeweils eine durchgehende Nut 14 vorgesehen, die der Ölversorgung des Druckstücks 13 dient. Bei dem gezeigten Beispiel entspricht die Länge der Nut 14 der Länge der nicht durchgehenden Nuten 12.

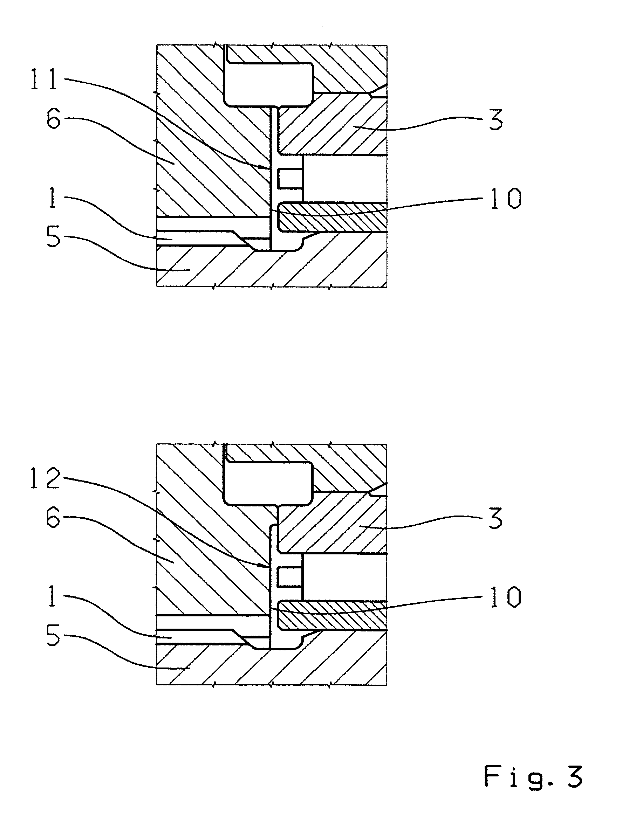

Gegenstand der Figur 3 sind zwei schematische Detailansichten des durch den Kreis in Figur 1 markierten Bereichs zur Veranschaulichung der Ausgestaltung des Axialanlaufs 10. Hierbei ist bei der Schnittansicht gemäß der unteren Teilfigur eine nicht durchgehende Nut 12 erkennbar, wobei bei der in der oberen Teilfigur gezeigten Schnittansicht eine durchgehende Nut 11 dargestellt ist.

In Figur 1 sind auch die an der der Synchronisierung 4 abgewandten Seite der Losräder 2, 3 angeordneten Anlaufscheiben 17, 18 dargestellt. Gemäß der Erfindung kann der Axialanlauf der Anlaufscheiben 17, 18 wie der Axialanlauf 10 der Losräder am Synchronkörper ausgeführt sein, um eine effektive Beölung und somit eine Verbesserung des Verschleißverhaltens zu erzielen.

Selbstverständlich fällt auch jede konstruktive Ausbildung, insbesondere jede räumliche Anordnung der Bauteile der erfindungsgemäßen Einrichtung zur Beölung der Axialanläufe von Losrädern an wellenfest angeordneten Bauteilen an sich sowie zueinander und soweit technisch sinnvoll, unter den Schutzumfang der vorliegenden Ansprüche, ohne die Funktion der Einrichtung, wie sie in den Ansprüchen angegeben ist, zu beeinflussen, auch wenn diese Ausbildungen nicht explizit in den Figuren oder in der Beschreibung dargestellt sind.

### Bezugszeichen

- 1: Welle
- 2: Losrad
- 3: Losrad
- 4: Synchronisierung
- 5: Öldurchführung
- 6: Synchronkörper
- 7: Synchronring
- 8: Schaltmuffe
- 9: Druckstück
- 10: Axialanlauf
- 11: durchgehende Nut
- 12: nicht durchgehende Nut
- 13: Druckstückaufnahme
- 14: durchgehende Nut
- 15: radiale Bohrung
- 16: radiale Bohrung
- 17: Anlaufscheibe
- 18: Anlaufscheibe
- 19: Lagerbuchse

## Patentansprüche

1. Axialanlauf (10) eines auf einer eine axial verlaufende Bohrung bzw. Öldurchführung (5) aufweisenden Welle (1) angeordneten Losrads an einem wellenfest angeordneten Bauteil (6, 17, 18), **dadurch gekennzeichnet, dass** der Axialanlauf (10) mehrere durchgehende und nicht durchgehende Nuten (11, 12) aufweist, die an der dem Losrad (2, 3) zugewandten Seite des Axialanlaufs (10) angebracht sind und mit der axial verlaufenden Bohrung bzw. Öldurchführung (5) der Welle (1) zum Zweck der Beölung des Axialanlaufs (10) fluidtechnisch verbunden sind.

2. Axialanlauf (10) eines auf einer eine axial verlaufende Bohrung bzw. Öldurchführung (5) aufweisenden Welle (1) angeordneten Losrads an einem wellenfest angeordneten Bauteil (6, 17, 18), nach Anspruch 1, **dadurch** g e - kennzeichnet, dass die Nuten (11, 12) um den Umfang des Axialanlaufs (10) verteilt angeordnet sind.

3. Axialanlauf (10) eines auf einer eine axial verlaufende Bohrung bzw. Öldurchführung (5) aufweisenden Welle (1) angeordneten Losrads an einem wellenfest angeordneten Bauteil (6), nach Anspruch 1 oder 2, **dadurch gekennzeichnet, dass** die durchgehenden und die nicht durchgehenden Nuten (11, 12) abwechselnd um den Umfang des Axialanlaufs (10) am wellenfest angeordneten Bauteil (6, 17, 18) angeordnet sind.

4. Axialanlauf (10) eines auf einer eine axial verlaufende Bohrung bzw. Öldurchführung (5) aufweisenden Welle (1) angeordneten Losrads an einem wellenfest angeordneten Bauteil (6), nach Anspruch 1, 2 oder 3, **dadurch gekennzeichnet, dass** die Nuten (11, 12) nadelförmig sind.

5. Axialanlauf (10) eines auf einer eine axial verlaufende Bohrung bzw. Öldurchführung (5) aufweisenden Welle (1) angeordneten Losrads an einem wellenfest angeordneten Bauteil (6), nach einem der Ansprüche 1 bis 4 **dadurch gekennzeichnet, dass** die Nuten (11, 12) radial verlaufen.

6. Axialanlauf (10) eines auf einer eine axial verlaufende Bohrung bzw. Öldurchführung (5) aufweisenden Welle (1) angeordneten Losrads an einem wellenfest angeordneten Bauteil (6), nach einem der vorangehenden Ansprüche **dadurch gekennzeichnet, dass** für den Fall, dass das wellenfest angeordnete Bauteil (6) der Synchronkörper einer Synchronisierung (4) ist, radial betrachtet unterhalb jeder Druckstückaufnahme (13) zumindest eine durchgehende Nut (14) vorgesehen ist, die der Beölung des Druckstücks (9) dient

## Claims

1. Axial run-on collar (10), for a loose gear arranged on a shaft (1) which has an axially running bore or oil passage (5), on a component (6, 17, 18) arranged fixedly with respect to the shaft, **characterized in that** the axial run-on collar (10) has a plurality of continuous and non-continuous grooves (11, 12) which are formed on that side of the axial run-on collar (10) which faces towards the loose gear (2, 3), which grooves are fluidically connected to the axially running bore or oil passage (5) of the shaft (1) for the purpose of oiling the axial run-on collar (10).

2. Axial run-on collar (10), for a loose gear arranged on a shaft (1) which has an axially running bore or oil passage (5), on a component (6, 17, 18) arranged fixedly with respect to the shaft, according to Claim 1, **characterized in that** the grooves (11, 12) are arranged so as to be distributed about the circumference of the axial run-on collar (10).

3. Axial run-on collar (10), for a loose gear arranged on a shaft (1) which has an axially running bore or oil passage (5), on a component (6) arranged fixedly with respect to the shaft, according to Claim 1 or 2, **characterized in that** the continuous and the non-continuous grooves (11, 12) are arranged in an alternating fashion about the circumference of the axial run-on collar (10) on the component (6, 17, 18) arranged fixedly with respect to the shaft.

4. Axial run-on collar (10), for a loose gear arranged on a shaft (1) which has an axially running bore or oil passage (5), on a component (6) arranged fixedly with respect to the shaft, according to Claim 1, 2 or 3, **characterized in that** the grooves (11, 12) are needle-shaped.

5. Axial run-on collar (10), for a loose gear arranged on a shaft (1) which has an axially running bore or oil passage (5), on a component (6) arranged fixedly with respect to the shaft, according to one of Claims 1 to 4, **characterized in that** the grooves (11, 12) run radially.

6. Axial run-on collar (10), for a loose gear arranged on a shaft (1) which has an axially running bore or oil passage (5), on a component (6) arranged fixedly with respect to the shaft, according to one of the preceding claims, **characterized in that**, if the component (6) arranged fixedly with respect to the shaft is the synchronizing body of a synchronizing arrangement (4), at least one continuous groove (14) is provided radially below each thrust piece receptacle (13), which groove (14) serves for oiling the thrust piece (9).

## Revendications

1. Butée axiale (10) d'une roue folle disposée sur un arbre (1) présentant un alésage ou un passage d'huile (5) s'étendant axialement sur un composant (6, 17, 18) disposé de manière fixée à l'arbre, **caractérisée en ce que** la butée axiale (10) présente plusieurs rainures continues et non continues (11, 12), qui sont montées du côté de la butée axiale (10) tourné vers la roue libre (2, 3), et qui sont connectées fluidiquement à l'alésage ou le passage d'huile (5) s'étendant axialement de l'arbre (1) aux fins d'huiler la butée axiale (10).

2. Butée axiale (10) d'une roue folle disposée sur un arbre (1) présentant un alésage ou un passage d'huile (5) s'étendant axialement sur un composant (6, 17, 18) disposé de manière fixée à l'arbre selon la revendication 1, **caractérisée en ce que** les rainures (11, 12) sont réparties sur la périphérie de la butée axiale (10).

3. Butée axiale (10) d'une roue folle disposée sur un arbre (1) présentant un alésage ou un passage d'huile (5) s'étendant axialement sur un composant (6) disposé de manière fixée à l'arbre, selon la revendication 1 ou 2, **caractérisée en ce que** les rainures continues et non continues (11, 12) sont disposées en alternance autour de la périphérie de la butée axiale (10) sur le composant (6, 17, 18) disposé de manière fixée à l'arbre.

4. Butée axiale (10) d'une roue folle disposée sur un arbre (1) présentant un alésage ou un passage d'huile (5) s'étendant axialement sur un composant (6) disposé de manière fixée à l'arbre, selon la revendication 1, 2 ou 3, **caractérisée en ce que** les rainures (11, 12) sont en forme d'aiguille.

5. Butée axiale (10) d'une roue folle disposée sur un arbre (1) présentant un alésage ou un passage d'huile (5) s'étendant axialement sur un composant (6) disposé de manière fixée à l'arbre, selon l'une quelconque des revendications 1 à 4, **caractérisée en ce que** les rainures (11, 12) s'étendent radialement.

6. Butée axiale (10) d'une roue folle disposée sur un arbre (1) présentant un alésage ou un passage d'huile (5) s'étendant axialement sur un composant (6) disposé de manière fixée à l'arbre, selon l'une quelconque des revendications précédentes, **caractérisée en ce que** dans le cas où le composant (6) disposé de manière fixée à l'arbre est le corps synchrone d'une synchronisation (4), au moins une rainure continue (14) est prévue, considéré radialement, sous chaque logement de pièce de pression (13), laquelle sert à huiler la pièce de pression (9).
